# EUROPEAN PATENT APPLICATION

(11) **EP 1 637 988 A2**
(43) Date of publication of application: **22.03.2006**
(21) Application number: 05104700.9
(22) Date of filing: 31.05.2005
(51) Int. Cl.: G06F 3/06, H04N 1/00

(54) **Transfer of data between a primary and secondary device**

(30) Priority: 30.06.2004 KR 2004050045
(71) Applicant: SAMSUNG ELECTRONICS CO., LTD., Suwon-si, Gyeonggi-do (KR)
(72) Inventor: JEONG, Yong-ju, Gweonseon-gu, Suwon-si, Gyeonggi-do (KR)
(74) Representative: Geary, Stuart Lloyd

(57) **Abstract**

Disclosed is an AV system capable of sending image files to an external device and an image file transfer method therefor. The AV system capable of performing at least one of an image-capturing function, image-receiving function, image-recording function, and image-reproducing function, comprises a communication interface unit for performing data communications with an external device; a recording medium for storing image files; an input unit; and a controller for, if a file transfer command is inputted through the input unit, controlling the communication interface unit to send a 'file transfer allowable' request to the external device, and, if the communication interface unit receives a 'file transfer allowable' response from the external device, controlling the communication interface unit to send the image files stored in the recording medium to the external device.

## Description

The present invention relates to a system comprising a primary device, including a control means and storage means, and a secondary device, including a controller, user input means and memory means, the primary and secondary devices having complementary data communication interfaces for transferring audio and/or image data from the memory means to the storage means.

Audio/Video (AV) systems are capable of reproducing internally-generated or externally-received image data, storing in recording media the image data as image files, or playing the image files. Digital cameras and digital camcorders, are typical examples of AV systems which reproduce internally-produced image data, and MP3 players, are typical examples of AV systems that reproduce received image data.

The recording media in an AV system has a relatively small storage capacity. However, portable AV systems have recording media which is of a much smaller storage capacity. Thus, if a user wishes to store new image, he or she moves the image files stored in the recording media of the AV system to an external device which has a recording medium with a larger storage capacity. This provides storage space in the recording medium of the AV system.

In order to do this, most AV systems provide an AV system-to-PC file transfer function for sending image files stored in the recording medium to a PC. The AV system-to-PC file transfer function can be carried out by connecting the AV system and the PC by cable, selecting the image files to be transferred and a folder where the image files are to be transferred using an application program installed in the PC. The user then inputs a file transfer command.

As described above, users have to use the PC to generate the inputs controlling the AV system-to-PC file transfer, since controlling such operations using the PC gives the user more convenience than using the AV system.

However, such input operations through the PC can be rather inconvenient to users unfamiliar with the operations of the PC. Further, if users are unfamiliar with the tasks involved in installing application programs in the PC prior to transferring the files, they may think file transfer is a difficult task.

Further, since the AV system-to-PC file transfer is carried out using a cable, the AV system-to-PC file transfer tasks have to be performed in the vicinity of the PC. As such, the input operations for AV system-to-PC file transfer is available only through the PC. The user is inconvenienced by such limitations.

However, if a wireless communication interface is used, such as Bluetooth, the AV system-to-PC file transfer can be done in a wireless manner. This means that the users are not limited to performing file transfer tasks within the vicinity of the PC. However, if users are only able to perform the file transfer tasks using the PC, there occurs the problem that the users can only perform the AV system-to-PC file transfer tasks only at the location where the PC is located.

The present invention has been developed in order to address the above drawbacks and other problems associated with the known arrangement. An aspect of the present invention is to provide an AV system and image file transfer method therefor capable of transferring image files stored on recording media to external devices such as PCs through input operations on the AV system.

The present invention relates to a system comprising a primary device, including a control means and storage means, and a secondary device, including a controller, user input means and memory means, the primary and secondary devices having complementary data communication interfaces for transferring audio and/or image data from the memory means to the storage means,

A system according to the present invention is characterised by the control means being configured to transmit a secondary device initiated upload enable signal to the secondary device, and the controller being responsive to reception of a secondary device initiated upload enable signal to the secondary device to become responsive to operation of the user input means to initiate the transfer of audio and/or image data from the memory means to the storage means via said data communication interfaces.

Other additional and/or preferred features are set forth in claims 2 to 4 appended hereto.

An embodiment of the present invention will now be described, by way of example only, and with reference to the accompanying drawings, in which:
Figure 1 is a block diagram showing an AV system capable of transferring image files to external devices using operations input on the AV system according to an embodiment of the present invention; and
Figure 2 is a flow chart explaining a process for transferring image files to external devices through input operations on an AV system according to an embodiment of the present invention.

Throughout the drawings, it should be understood that like reference numbers refer to like features, structures and elements.

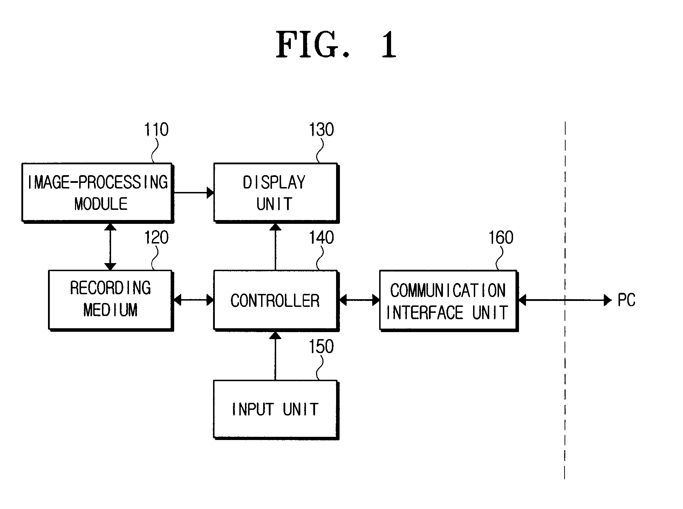

Referring to Figure 1, the AV system has an image-processing module 110, a recording medium 120, a display unit 130, a controller 140, an input unit 150, and a communication interface unit 160. Further, the AV system can be connected to a personal computer (PC), (which is an example of an external device) in a wired or wireless manner.

The image-processing module 110 is a module for carrying out an image-capturing function, image-receiving function, image-recording function, image-reproducing function, and so on. In detail, the image-capturing function refers to a function for generating an image signal preferably by use of a lens and a charge-coupled device (CCD) or the like and the image-receiving function refers to a function for receiving broadcast signals and external input signals through an antenna, cable, and so on. The image-recording function refers to a function of recording the generated and/or received image data in the recording medium 120 as image files, and the image-reproducing function refers to a function of reproducing and displaying the image files recorded in the recording medium 120 on the display unit 130.

The image-processing module 110 does not have to be implemented to carry out all the above functions, (the image-capturing function, image-receiving function, image-recording function, and the image-reproducing function) and only a selection of the functions may be utilised depending on the type of AV system being implemented. As an example, in a digital camera or a digital camcorder, the image-processing module 110 does not have to have the broadcast signal-receiving function, and in an MP3 player the image-processing module 110 does not have to have the image-capturing function.

The recording medium 120 stores image files generated and/or received by the image-processing module 110 and image files transferred through the communication interface unit 160. The image files can be classified into moving-picture files, still image files, audio files, and so on. Further, the recording medium 120 can have a plurality of folders therein so that image files are sorted and stored in corresponding folders. For example, one can have moving-picture files stored in a moving-picture folder, still image files in a still image folder, and audio files in an audio folder.

The recording medium 120 may be a semiconductor memory, a compact disc (CDs), a digital video disc (DVD), a hard disc drive (HDD), memory cards, and so on. However, any medium that can store image files can be used as the recording medium 120.

The display unit 130 is a display unit for displaying images generated, received, and reproduced through the image-processing module 110 as well as user interface windows provided by the controller 140.

The communication interface unit 160 carries out data communications with a PC under the controls of the controller 140. Any communication mode can be used for the communications between the communication interface unit 160 and the PC.

The communication interface unit 160 and the PC can perform data communications therebetween in a universal serial bus (USB) interface mode, an IEEE 1394 interface mode, and on the like. In addition, the communication interface unit 160 and the PC can also perform data communications therebetween in the wireless communication interface mode, such as Bluetooth, WiFi or other suitable method.

The input unit 150 is a user interface unit allowing user operation commands to be input and sent to the controller 140. In particular, the input unit 150 is used to receive input commands necessary for AV system-PC file transfer. The input commands necessary for AV system-PC file transfer may be i) input commands for AV system-PC file transfer commands, ii) input commands for selecting the image files to be transferred, iii) input commands for selecting the folders on the HDD of the PC to which the selected image files are to be transferred, and so on.

The controller 140 drives the AV system according to the user operation commands sent by the input unit 150, as well as control signals which control the overall operation of the AV system. In particular, the controller 140 performs a series of processing steps required for the AV system-PC file transfer.

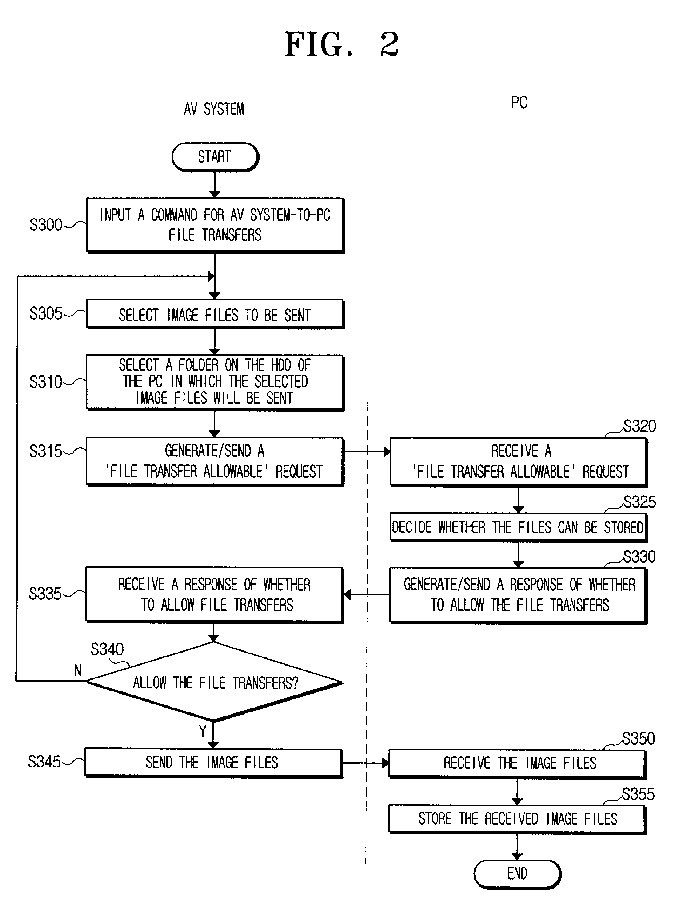

A description will now be made of a process for the AV system of Figure 1 to send image files recorded on the recording medium 120 to an external device (such as the PC), with reference to Figure 2. In Figure 2, for ease of understanding, the processing steps shown on the left are carried out in the AV system, and the processing steps shown on the right are carried out in the PC.

Prior to the AV system-PC file transfer, a user connects the AV system to a PC in a wired or wireless manner, and carries out input operations necessary for the AV system-PC file transfer using the AV system rather than the PC (See steps S300, S305, and S310).

In order to do this, a user inputs a command for the AV system-to-PC file transfer using the input unit 150 provided on the AV system (S300). The user then selects the image files (from those stored in the recording medium 120) that will be sent to the PC (S305), and selects a folder on the HDD of the PC to which the selected image files will be sent (S310).

The user's input operations in steps S300 to S310 can be accomplished using cursor movements on a user interface window, preferably, a menu window, which the controller 140 provides the user on the display unit 130.

Further, in step S305, the controller 140 causes the display unit 130 to display a list of image files stored in the recording medium 120. This allows the user to refer to the list when selecting image files. In step S305, the user can select one, some, or all of the image files. Further, the user can select all image files by image file types, which means that, for example, the user can select all moving-picture files, still image files, or audio files stored in the recording medium 120 with one input operation.

Further, in the step S310, the controller 140 causes the display unit 130 to display a list of folders which exist on the HDD of the PC. Thus, a user can refer to the list when selecting the folder(s) to be input. The user can select, for an input, a folder on the HDD of the PC which has the same name as the folder on the recording medium 120 of the AV system in which the image files are currently stored.

If the user's input operations are completed using steps S300 to S310, the controller 140 generates a request for 'file transfer allowable' by using the selected input information. This request is sent to the PC via the communication interface unit 160 (S315). The 'file transfer allowable' request information preferably includes the file names of the image files selected during the input in step S305 and the folder name of the folder selected during the input in step S310.

After the PC receives the 'file transfer allowable' request (S320), the PC decides whether the files can be stored (S325). Further, the PC generates a response to the 'file allowable' request based on the result of the decision in step S325. This response is sent to the AV system (S330).

In detail, the PC refers to the file names and the folder name included in the 'file transfer allowable' request, looks up whether the image files having the same names exist in the same folder name on its HDD, and decides whether the files can be stored.

In the step S330, the communication interface unit 160 of the AV system receives the response generated by the PC (S335). If the response is determined to be the 'file transfer allowable' response (S340), the controller 140 reads from the recording medium 120 the image files selected for input in the step S305 and sends the image files to the PC via the communication interface unit 160 (S345).

The PC then receives the sent image files (S350), refers to the folder name included in the 'file transfer allowable' request received in the step S320, and stores the received image files in the folder having the same folder name as one in the HDD (S355).

However, if the response from the PC in step S335 is determined to be a 'file transfer unallowable' response (S340), the controller 140 proceeds through steps S305 and S310 again to receive a changed file and/or folder name from the user, and generates and sends again the 'file transfer allowable' request including the file name and/or folder name input by the user.

The embodiments of the present invention refer to a PC being the external device connected to the AV system. However, the PC is merely one example, and the external device which may be connected to the AV system is not limited to the PC. Therefore, the present invention can be applied to the case where one AV system is connected to another AV system for file transfers therebetween.

Further, there is no limit to the types of AV systems to which the present invention is applied. That is, embodiments of the present invention can be applied to any AV system which can perform at least one of the functions of generating, receiving, reproducing, and storing images. Accordingly, embodiments of the present invention can be applied to CD players, DVD players, HDD players, memory card-mountable players, digital cameras, digital camcorders, mobile phones, PDAs, TV sets, set-top boxes, MP3 players, audio systems, and combination AV systems comprising a combination of the above players.

As described above, embodiments of the present invention enable a user to send image files stored on a recording medium of an AV system to external devices such as PCs using operations input on the AV system. Thus, even user is unfamiliar with the operations of PCs, they can easily use the AV system-to-PC file transfer function. Additionally, a user can perform the AV system-to-PC file transfers through an AV system even in the places where PCs are not located.

## Claims

1. A system comprising a primary device, including a control means and storage means, and a secondary device, including a controller (140), user input means (150) and memory means (120), the primary and secondary devices having complementary data communication interfaces (160) for transferring audio and/or image data from the memory means (120) to the storage means,
**characterised by**
the control means being configured to transmit a secondary device initiated upload enable signal to the secondary device, and
the controller (140) being responsive to reception of a secondary device initiated upload enable signal to the secondary device to become responsive to operation of the user input means (150) to initiate the transfer of audio and/or image data from the memory means (120) to the storage means via said data communication interfaces.

2. A system according to claim 1, wherein the controller (140) is responsive to operation of the user input means (150) to send an upload specification signal, including a destination identifier, to the control means and the control means is responsive to reception of an upload specification signal from the control means to validate the destination identifier and send an upload enable signal to the controller (140), if the destination identifier is valid.

3. A computer configured for use as the secondary device in a system according to either one of claim 1 or 2.

4. A CD player or DVD player or HDD player or memory card-mountable player or digital camera or digital camcorder or mobile phone or PDA or TV set or set-top box or MP3 player configured for use in as the primary device in a system according to either one of claim 1 or 2.

5. A method of transferring audio and/or image data from a secondary to a primary device,
**characterised by**
transmitting a secondary device initiated upload enable signal from the primary device to the secondary device, and
responding to the reception of the secondary device initiated upload enable signal by becoming responsive to operation of the user input means to initiate the transfer of audio and/or image data from the memory means to the storage means via said data communication interfaces.

6. An audio video (AV) system capable of performing at least one of an image-capturing function, image-receiving function, image-recording function, and image-reproducing function, comprising:
a communication interface unit for performing data communications with an external device;
a recording medium for storing image files;
an input unit; and
a controller for controlling the communication interface unit to send a 'file transfer allowable' request to the external device, if a file transfer command is input through the input unit, and, if the communication interface unit receives a 'file transfer allowable' response from the external device, controlling the communication interface unit to send the image files stored in the recording medium to the external device.

7. The AV system as claimed in claim 6, wherein, if image files to be sent are selected through the input unit, the controller includes in the 'file transfer allowable' request information comprising names of the selected image files.

8. The AV system as claimed in claim 7, wherein, if the communication interface unit receives a 'file transfer unallowable' response from the external device, the controller controls the communication interface unit to send to the external device the 'file transfer allowable' request comprising changed file names input through the input unit.

9. The AV system as claimed in claim 7, wherein, if a folder on the recording medium of the external device to which the image files are to be transferred is selected through the input unit, the controller includes in the 'file transfer allowable' request information comprising the name of the selected folder.

10. The AV system as claimed in claim 9, wherein, if the communication interface unit receives a 'file transfer unallowable' response from the external device, the controller controls the communication interface unit to re-send to the external device the 'file transfer allowable' request comprising at least one of the changed file and folder names re-inputted through the input unit.

11. The AV system as claimed in claim 6, wherein the external device is a personal computer (PC).

12. The AV system as claimed in claim 6, wherein the communication interface unit performs data communications with the external device according to any of a USB interface mode, an IEEE 1394 interface mode, and a wireless communication mode.

13. An image file transfer method for an AV system capable of performing at least one of an image-capturing function, image-receiving function, image-recording function, and image-reproducing function, comprising the steps of:
a) if a file transfer command is input through an input unit provided on the AV system, sending from an audio video (AV) system a 'file transfer allowable' request to an external device; and
b) if a 'file transfer allowable' response is received from the external device, sending from the AV system to the external device image files stored in a recording medium provided in the AV system.

14. The image file transfer method as claimed in claim 13, wherein step a) further comprises the step of:
if image files to be sent are selected through the input unit, including in the 'file transfer allowable' request information the names of the selected image files..

15. The image file transfer method as claimed in claim 14, further comprising a step of:
if a 'file transfer unallowable' response is received from the external device, re-sending from an AV system to the external device the 'file transfer allowable' request information including changed file names input through the input unit.

16. The image file transfer method as claimed in claim 14, wherein step a) further comprises the step of:
if a folder on the recording medium of the external device to which the image files are to be transferred is selected through the input unit, including in the 'file transfer allowable' request information a name of the selected folder.

17. The image file transfer method as claimed in claim 16, further comprising a step of:
if the 'file transfer unallowable' response is received from the external device, re-sending to the external device the 'file transfer allowable' request information including at least one of the changed file and folder names input through the input unit.

18. The image file transfer method as claimed in claim 13, wherein the external device is a personal computer (PC).

19. The image file transfer method as claimed in claim 13, wherein the AV system is any of a CD player, a DVD player, an HDD player, a memory card-mountable player, a digital camera, a digital camcorder, a mobile phone, a personal digital assistant (PDA), a TV, a set top box, an MP3 player, an audio system, and a combination AV system comprising any combination thereof.

20. The image file transfer method as claimed in claim 13, wherein the external device is an AV system comprising any of a CD player, a DVD player, an HDD player, a memory card-mountable player, a digital camera, a digital camcorder, a mobile phone, a personal digital assistant (PDA), a TV, a set top box, an MP3 player, an audio system, and a combination AV system comprising any combination thereof.
